# EUROPÄISCHE PATENTSCHRIFT

(11) **EP 0 503 412 B1**
(45) Veröffentlichungstag und Bekanntmachung des Hinweises auf die Patenterteilung: **13.01.1999**
(21) Anmeldenummer: 92103515.0
(22) Anmeldetag: 29.02.1992
(51) Int. Cl.: H04M 9/00, H04Q 11/04

(54) **Tastengesteuerte Wechsel- oder Gegen- Lautsprechanlage mit Linienwahl**
Key-controlled multi-line telephone system for alternate, simultaneous or loud-speaking and communication
Installation téléphonique à lignes multiples commandée par touches pour la communication orale alternative ou simultanée par haut-parleur

(30) Priorität: 09.03.1991 DE 4107591
(43) Veröffentlichungstag der Anmeldung: 16.09.1992
(73) Patentinhaber: Neumann Elektronik GmbH, D-45478 Mülheim (DE)
(72) Erfinder: Schulte, Friedrich, W-4300 Essen 1 (DE); Kemmerling, Martin, W-5802 Wetter 2 (DE)
(74) Vertreter: Feder, Wolf-Dietrich, Dr. Dipl.-Phys.

(56) Entgegenhaltungen:
- EP-A- 0 324 058
- EP-A- 0 471 877
- US-A- 4 873 717
- PATENT ABSTRACTS OF JAPAN vol. 013 no. 307 (E-787) ,13.Juli 1989 & JP-A-01 082794 (NEC CORP) 28.März 1989,
- P.BOCKER 'ISDN, Das diensteintegrierende digitale Nachrichtennetz' 1986 , SPRINGER-VERLAG , BERLIN DE * Seite 162; Abbildung 6.13 * * Seite 186; Abbildung 7.13 * * Seite 177, Zeile 20 - Zeile 26 *
- ICC'90, SESSION 211, PAPER 3,, Bd. 1, 15.April 1990 ATLANTA, US, Seiten 1-6, XP 000147390 D.ROBERTSON ET AL. 'A Highly Flexible Digital Telephone System'

## Beschreibung

Die Erfindung betrifft eine tastengesteuerte Wechsel- oder Gegen- Lautsprechanlage mit Linienwahl.

Es ist bekannt, bei einer derartigen, auch als WL-Anlage bezeichneten Einrichtung, die Sprachsignale als analoge NF-Signale zwischen den Teilnehmereinrichtungen über die Zentrale zu übertragen, wobei bei reinen Wechselsprech-Anlagen die Richtung der NF-Übertragung jeweils umgeschaltet wird. Die Linien sind als zusätzliche Adern auf dem Übertragungsmedium realisiert und werden im Raummultiplex angesteuert. Diese Art der Übertragung ist vor allem bei kleineren Anlagen mit relativ wenigen Linien üblich. Beispiele für derartige WL-Anlagen sind in DE-PS 28 37 950 und DE-PS 30 00 858 beschrieben.

Es sind auch Wechsel- oder Gegen- Lautsprechanlagen mit einer größeren Anzahl von Linien bekannt, bei denen die Linieninformationen, also Steuersignale und Belegungszustandssignale, als digitale serielle Signale im Zeitmultiplex zwischen der Zentrale und den Teilnehmereinrichtungen übertragen werden. Die Sprachsignale werden bei diesen Einrichtungen jedoch weiterhin als analoge NF-Signale auf einem eigenen Medium übertragen. Eine derartige Einrichtung ist beispielsweise in DE-PS 32 14 656 beschrieben.

Es hat sich herausgestellt, daß bei diesen bekannten Einrichtungen der Übertragungsdatenrate und der Leitungslänge enge Grenzen gesetzt sind.

In US-A-4 873 717 ist eine Ruf-Erfassungsanlage beschrieben, bei der mehrere Teilnehmereinrichtungen an eine Zentrale angeschlossen sind. Die Anlage arbeitet mit Codewahl und die Teilnehmereinrichtungen sind an die Zentrale über eine serielle Übertragungsstrecke angeschlossen, deren Kanalstruktur drei Übertragungskanäle aufweist, von denen der erste und zweite Übertragungskanal jeweils eine Übertragungsrate von 64 kBit/s aufweist und der dritte Übertragungskanal eine Übertragungsrate von 16 kBit/s besitzt, wobei jeder der beiden ersten Kanäle (B-Kanäle) entweder zur Übertragung von Sprachsignalen oder zur Übertragung von Datensignalen benutzt wird, während über den dritten Kanal (D-Kanal) Signalpakete übertragen werden zum Austausch von Information zwischen den Teilnehmereinrichtungen untereinander oder den Teilnehmereinrichtungen und der Zentrale.

In dem Dokument: P. Bocker "ISDN, Das diensteintegrierende digitale Nachrichtennetz", 1986, Springer-Verlag, Berlin DE, wird der Aufbau eines diensteintegrierenden digitalen Nachrichtennetzes mit zwei 64-kBit/s-Basis-Kanälen und einem 16-kBit/s-Hilfskanal und seine Realisierung mittels Adernoaaren oder Lichtwellenleitern beschrieben.

In dem Dokument: "Patent Abstracts of Japan" vol. 013, no. 307 (E-787), 13. Juli 1989 & JP-A-01 082794 vom 28. März 1989 wird eine digitale Tastentelefoneinrichtung beschrieben, bei der zwei Teilnehmereinrichtungen über eine gemeinsame digitale serielle Übertragungsstrecke mit der Zentrale verbunden sind.

Der Erfindung liegt die Aufgabe zugrunde, eine tastengesteuerte Wechsel- oder Gegen- Lautsprechanlage mit Linienwahl so auszugestalten, daß mit einer hohen Übertragungsdatenrate und mit von der Leitungslänge unabhängiger Übertragungsqualität sowohl die Sprachsignale als auch die Steuersignale und die Belegungszustandssignale zwischen der Zentrale und den Teilnehmereinrichtungen übertragen werden können.

Die Lösung dieser Aufgabe geschieht erfindungsgemäß mit den Merkmalen aus dem Patentanspruch 1. Vorteilhafte Weiterbildungen der Erfindung sind in den Unteransprüchen beschrieben.

Der Grundgedanke der Erfindung besteht darin, bei einer tastengesteuerten Wechsel- oder Gegen- Lautsprechanlage mit Linienwahl sämtliche zwischen den Teilnehmereinrichtungen und der Zentrale zu übertragenden Signale in digitaler serieller Form zu übertragen, wobei die Ankopplung der Teilnehmereinrichtungen an die Zentrale über eine Übertragungsstrecke mit einer besonderen an sich bekannten Kanalstruktur erfolgt. Diese Kanalstruktur kann beispielsweise der des ISDN-Basisanschlusses entsprechen mit zwei sogenannten B-Kanälen mit je 64 kBit/s Datenrate und einem sogenannten D-Kanal mit 16 kBit/s Datenrate. Die physikalische Realisierung einer solchen Übertragungsstrecke kann entweder mittels einer Vierdraht-Leitung erfolgen unter Verwendung einer sogenannten S-Schnittstelle im ISDN oder mit einer Zweidraht-Leitung unter Verwendung einer sogenannten U-Schnittstelle im ISDN. Sie kann aber auch durch ein anderes Medium, beispielsweise über Lichtwellenleiter, realisiert werden.

Durch die Ausnutzung der beiden B-Kanäle für die Übertragung der Sprachsignale ist eine breitbandige Übertragung der NF-Signale mit einer Datenrate von insgesamt 128 kBit/s möglich, die grundsätzlich in beiden Richtungen zur Verfügung stehen. Es ist also auch Gegensprechen möglich.

Sämtliche Steuerinformationen für die Teilnehmereinrichtung, beispielsweise "Verbindungsaufbau kommend", "Verbindungsabbau" usw., werden in codierter Form gesichert über den D-Kanal zur Teilnehmereinrichtung hin übertragen. Ebenso werden die Signale über den Belegungszustand aller in der Anlage vorhandenen Teilnehmereinrichtungen, also der komplette Anlagenstatus, in Form eines Datenpaketes über den 0-Kanal übertragen. Weiterhin werden die von der Teilnehmereinrichtung abgehenden Signale über die Linieninformation in Form eines Daten-Telegramms über den D-Kanal von der Teilnehmereinrichtung zur Zentrale übertragen. Schließlich sind zusätzlich beliebige Datenübertragungen zwischen der Zentrale und der Teilnehmereinrichtung über den 0-Kanal in beiden Richtungen möglich.

Der Vorteil der erfindungsgemäßen Einrichtung liegt darin, daß einerseits nur eine geringe Anzahl von Adern in der Übertragungsleitung, unabhängig von der Anzahl der Linien, über die die Teilnehmereinrichtung verfügt, notwendig ist und daß andererseits bei Verwendung der gängigen ISDN-Schnittstellen-ICs sich die auf diesen Chips integrierten Synchronisations- und Datensicherungsmechanismen unmittelbar nutzen lassen. Durch die Möglichkeit der bidirektionalen Übertragung beliebiger Daten zwischen Teilnehmereinrichtung und Zentrale ist es möglich, noch besondere Leistungsmerkmale in der Teilnehmereinrichtung vorzusehen, beispielsweise Texteinblendungen in einem Display.

Im folgenden wird anhand der beigefügten Zeichnungen ein Ausführungsbeispiel für eine tastengesteuerte Wechsel- oder Gegen- Lautsprechanlage mit Linienwahl nach der Erfindung näher erläutert.

In den Zeichnungen zeigen:
- Fig. 1: in einem stark schematisierten Blockschaltbild eine WL-Anlage mit einer Zentrale und mehreren Teilnehmereinrichtungen;
- Fig. 2: in gegenüber Fig. 1 detaillierterer Darstellung den Anschluß einer Teilnehmereinrichtung an die Zentrale;
- Fig. 3: in graphischer Darstellung die Anordnung der übertragenen Signale auf der Übertragungsstrecke der Einrichtung nach Fig. 1 und 2.

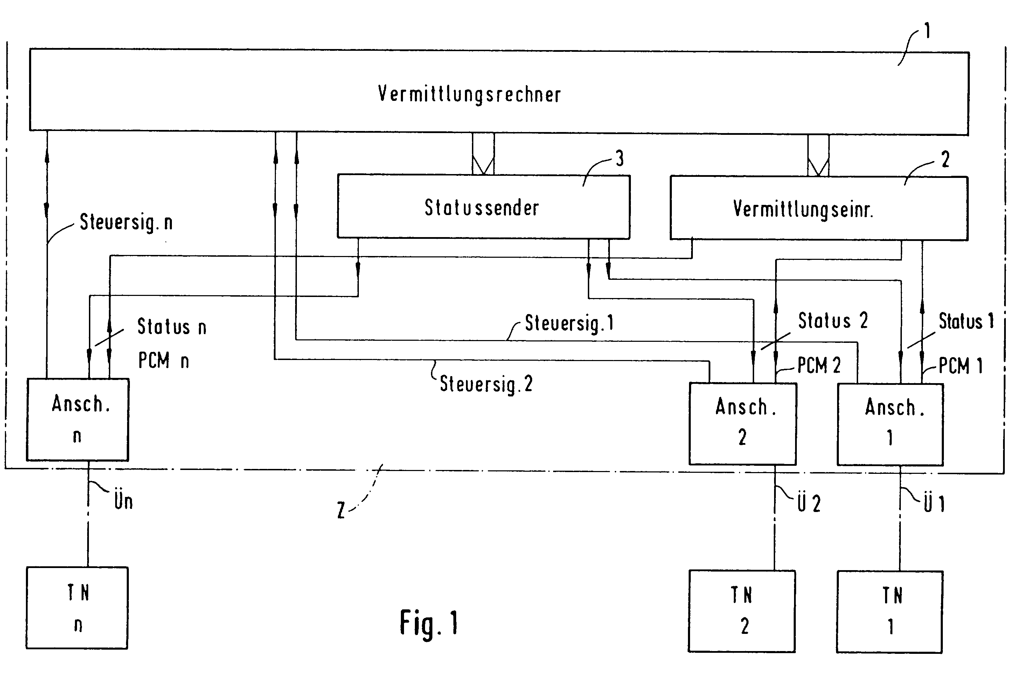

In Fig. 1 ist schematisch eine tastengesteuerte Wechsel-Lautsprechanlage mit Linienwahl dargestellt, die mehrere Teilnehmereinrichtungen aufweist, von denen in Fig. 1 die Teilnehmereinrichtungen TN1, TN2 und TNn dargestellt sind. Die Teilnehmereinrichtungen sind über Übertragungsstrecken Ü1, Ü2 bis Ün an eine Zentrale angeschlossen, die insgesamt mit Z bezeichnet ist. In der Zentrale befindet sich ein Vermittlungsrechner 1, der eine Vermittlungseinrichtung 2 zur Durchschaltung der Verbindungswege ansteuert. Weiterhin steuert der Vermittlungsrechner 1 eine als "Statussender" 3 bezeichnete Einrichtung, welche die Signale über den Belegungszustand der Gesamtanlage erzeugt und an die Teilnehmereinrichtungen weiterleitet. Weiterhin ist der Vermittlungsrechner 1 mit den Teilnehmereinrichtungen zur Abgabe und Aufnahme von Steuersignalen direkt verbunden. Die Ankopplung der Teilnehmereinrichtungen TN1, TN2 bis TNn erfolgt über in der Zentrale Z angeordnete Anschaltungen "Ansch1, Ansch2 bis Anschn".

Der Verlauf der PCM-Signale, der Belegungszustandssignale für den Status und der Steuersignale ist aus Fig. 1 abzulesen.

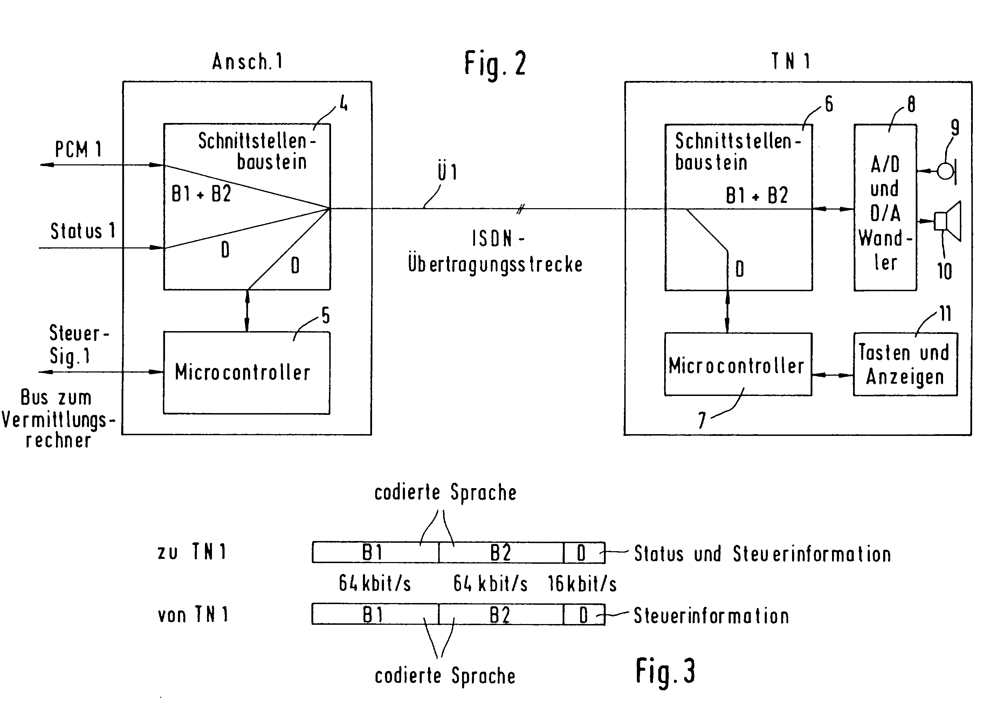

Fig. 2 zeigt etwas ausführlicher wie die Teilnehmereinrichtungen, beispielsweise die Teilnehmereinrichtung TN1, über die Übertragungsstrecke Ü1 an die Anschaltung "Ansch1" angekoppelt ist.

Hierfür enthält die Anschaltung 1 einen Schnittstellenbaustein 4 und einen Mikrokontroller 5, durch welche die PCM-Sprachsignale den beiden B-Kanälen der Übertragungsstrecke Ü1 zugeführt werden, während die Belegungszustandssignale für den Status dem D-Kanal der Übertragungsstecke 1 zugeführt werden und diesem 0-Kanal über den Mikrokontroller 5 auch sämtliche Steuersignale zu- und abgeführt werden.

In der Teilnehmereinrichtung befinden sich unter anderem ein Schnittstellenbaustein 6, ein Mikrokontroller 7, ein Analog/Digital-Digital/Analog-Wandler 8 sowie ein Mikrofon 9 und ein Lautsprecher 10 und ein Tasten- und Anzeigefeld 11.

Durch das Schnittstellenbauteil werden die beiden B-Kanäle der Übertragungsstrecke 1 mit dem Wandler 8 verbunden, während der D-Kanal über den Mikrokontroller 7 mit dem Tasten- und Anzeigefeld 11 verbunden ist.

Die Funktionsweise der dargestellten Anlage geschieht in der Weise, daß in an sich bekannter und nicht eigens beschriebener Weise serielle digitale Signale für die zu übertragenden Sprachsignale, Steuersignale und Belegungszustandssignale in den Teilnehmereinrichtungen erzeugt und der Zentrale Z zugeführt bzw. über die Zentrale den jeweils anderen Teilnehmereinrichtungen zugeführt werden.

Fig. 3 zeigt die Verteilung der unterschiedlichen Signale auf die drei Kanäle der Übertragungsstrecke.

## Patentansprüche

1. Tastengesteuerte Wechsel- oder Gegen-Lautsprechanlage mit Linienwahl, die eine Zentrale (Z) aufweist, an welche mehrere Teilnehmereinrichtungen (TN1...TNn) angeschlossen sind und bei der die automatische Durchschaltung der Ruf- und Verbindungswege in einer Vermittlungseinrichtung (2) sowie die Ermittlung des Belegungszustandes der Teilnehmereinrichtungen mittels eines in der Zentrale angeordneten Vermittlungsrechners (1) gesteuert werden und bei der die Steuersignale und Belegungszustandssignale der Linieninformation als digitale serielle Signale im Zeitmultiplex zwischen der Zentrale (Z) und den Teilnehmereinrichtungen (TN1...TNn) übertragen werden, und die Teilnehmereinrichtungen (TN1 bis TNn) jeweils nur über eine digitale serielle Übertragungsstrecke (Ü1 bis Ün) an die Zentrale (Z) angeschlossen sind, über welche sowohl die Steuersignale und Belegungszustandssignale als auch die Sprachsignale in digitaler Form im Zeitmultiplex übertragen werden, wobei die Kanalstruktur der Übertragungsstrecke (Ü1 bis Ün) mindestens drei Übertragungskanäle aufweist, von denen der erste und zweite Übertragungskanal (B-Kanal) jeweils eine Übertragungsrate von 64 kBit/s in jeder Richtung aufweist und mindestens der dritte Übertragungskanal (D-Kanal) eine Übertragungsrate von 16 kBit/s in jeder Richtung besitzt und alle Sprachsignale unter Ausnutzung des ersten und zweiten Übertragungskanals mit einer Daten rate von 128 kBit/s übertragen werden, während mindestens ein Teil der Steuersignale und der Belegungszustandssignale über den dritten Übertragungskanal übertragen wird.

2. Anlage nach Anspruch 1, dadurch gekennzeichnet, daß die Übertragungsstrecke (Ü1 bis Ün) eine vieradrige Übertragungsleitung enthält, an die über Schnittstellen (S-Schnittstellen) die Teilnehmereinrichtungen (TN1 bis TNn) und die Zentrale (Z) angeschlossen sind.

3. Anlage nach Anspruch 1, dadurch gekennzeichnet, daß die Übertragungsstrecke (Ü1 bis Ün) eine zweiadrige Übertragungsleitung enthält, an die über Schnittstellen (U-Schnittstellen) die Teilnehmereinrichtungen (TN1 bis TNn) und die Zentrale (Z) angeschlossen sind.

4. Anlage nach Anspruch 1, dadurch gekennzeichnet, daß die Übertragungsstrecke eine aus Glasfasern aufgebaute Übertragungsleitung enthält.

## Claims

1. Key-controlled simplex or duplex intercommunication system with line selection which has an exchange (Z) to which a plurality of subscriber devices (TN1..TNn) are connected and in which the automatic switchingthrough of the call and connection paths are controlled in a switching device (2) and also the detection of the seizure status of the subscriber devices is controlled by means of a switching processor (1) in the exchange, and in which the control signals and seizure-status signals of the line information are transmitted between the exchange (Z) and the subscriber devices (TN1...TNn) as digital serial signals in time-division multiplexing, and the subscriber devices (TN1 to TNn) are each connected to the exchange (Z) only via a digital serial transmission link (Ü1 to Ün) via which not only the control signals and seizure-status signals but also the speech signals are transmitted in digital form in time-division multiplexing, the channel structure of the transmission link (Ü1 to Ün) having at least three transmission channels, of which the first and second transmission channel (B channel) each have a transmission rate of 64 kbit/s in each direction and at least the third transmission channel (D channel) has a transmission rate of 16 kbit/s in each direction and all the speech signals are transmitted utilizing the first and second transmission channel having a data rate of 128 kbit/s, whereas at least some of the control signals and of the seizure-status signals are transmitted via the third transmission channel.

2. System according to Claim 1, characterized in that the transmission link (Ü1 to Ün) comprises a four-wire transmission line to which the subscriber devices (TN1 to TNn) and the exchange (Z) are connected via interfaces (S interfaces).

3. System according to Claim 1, characterized in that the transmission link (Ü1 to Ün) comprises a two-wire transmission line to which the subscriber devices (TN1 to TNn) and the exchange (Z) are connected via interfaces (U interfaces).

4. System according to Claim 1, characterized in that the transmission link comprises a transmission line made of glass fibres.

## Revendications

1. Installation d'appel par haut-parleur à fonctionnement alternant ou bidirectionnel, commandée par touches ou clavier, avec sélection de ligne, présentant une centrale (Z) à laquelle sont raccordés plusieurs dispositifs abonnés (TN1...TNn) et pour laquelle l'interconnexion automatique des voies d'appel et de liaison dans un dispositif de transmission (2), ainsi que la détermination de l'état d'occupation des dispositifs abonnés sont commandées à l'aide d'un ordinateur de communication (1) disposé dans la centrale, et pour laquelle les signaux de commande et les signaux d'état d'occupation de l'information de ligne sont transmis sous forme de signaux série numériques, en multiplexage par répartition dans le temps, entre la centrale (Z) et des dispositifs abonnés (TN1...TNn), et les dispositifs abonnés (TN1 à TNn) étant chacun raccordés à la centrale (Z) seulement par une voie de transmission série numérique (01 à 0n), sur laquelle tant les signaux de commande et les signaux d'état d'occupation, qu'également les signaux de parole sont transmis sous forme numérique, en multiplexage par répartition dans le temps, la structure de canal de la voie de transmission (Ü1 à Ün) présentant au moins trois canaux de transmission, dont le premier et le deuxième canal de transmission (canal B) présentent chacun un débit de transmission de 64 kBit/s dans chaque direction, et au moins le troisième canal de transmission (canal D) présente un débit de transmission de 16 kBit/s dans chaque direction, et tous les signaux de parole étant transmis en utilisant le premier et le deuxième canal de transmission avec un débit de transmission de données de 128 kBit/s, tandis qu'au moins une partie des signaux de commande et des signaux d'état d'occupation est transmise par le troisième canal de transmission.

2. Installation selon la revendication 1, caractérisée en ce que la voie de transmission (Ü1 à Un) contient une ligne de transmission à quatre conducteurs, auxquels sont raccordés, par des interfaces (interfaces S), les dispositifs abonnés (TN1 à TNn) et la centrale (Z).

3. Installation selon la revendication 1, caractérisée en ce que la voie de transmission (Ü1 à Un) contient une ligne de transmission à deux conducteurs, à laquelle sont raccordés, par des interfaces (interfaces U), les dispositifs abonnés (TN1 à TNn) et la centrale (Z).

4. Installation selon la revendication 1, caractérisée en ce que la voie de transmission contient une ligne de transmission construite en fibres de verre.
